# EUROPÄISCHE PATENTSCHRIFT

(11) **EP 3 271 036 B1**
(45) Veröffentlichungstag und Bekanntmachung des Hinweises auf die Patenterteilung: **22.05.2019**
(21) Anmeldenummer: 16715467.3
(22) Anmeldetag: 16.03.2016
(51) Int. Cl.: A63G 31/16

(54) **WASSERRUTSCHE SOWIE WASSERRUTSCHENSYSTEM**
WATER SLIDE AND WATER SLIDE SYSTEM
TOBOGGAN NAUTIQUE ET SYSTÈME DE TOBOGGAN NAUTIQUE

(30) Priorität: 19.03.2015 DE 102015104124
(43) Veröffentlichungstag der Anmeldung: 24.01.2018
(73) Patentinhaber: Klarer Freizeitanlagen AG, 8215 Hallau (CH)
(72) Erfinder: KLARER, Stefan, 8226 Schleitheim (CH)
(74) Vertreter: Patentanwälte Behrmann Wagner PartG mbB
(86) Internationale Anmeldenummer: PCT/EP2016/055727
(87) Internationale Veröffentlichungsnummer: WO 2016/146707

(56) Entgegenhaltungen:
- WO-A2-2009/055555
- JP-A- H04 325 181
- US-A1- 2009 143 155
- US-A1- 2010 160 054
- US-A1- 2014 309 049

## Beschreibung

Die Erfindung betrifft eine Wasserrutsche gemäß dem Oberbegriff des Anspruchs 1 mit einem eine Rutschfläche aufweisenden und eine Rutschrichtung definierenden Rutschabschnitt, d.h. eine zumindest abschnittsweise, vorzugsweise durchgängig, als Röhrenrutsche ausgebildete Wasserrutsche, mit einer, bevorzugt umfangsgeschlossenen, Umfangswand.

Ferner betrifft die Erfindung ein Wasserrutschensystem gemäß Anspruch 14.

Als Röhrenrutschen ausgebildete Wasserrutschen als Attraktion in Freizeitparks, Hallen- sowie Freibädern sind hinlänglich bekannt. Dabei bestehen Bestrebungen, immer neue Rutscherlebnisse für die Benutzer zu schaffen, ohne jedoch deren Sicherheit zu gefährden.

So ist beispielsweise in der US 2010/0016091 A1 eine Wasserrutsche beschrieben worden, die abwechselnd angeordnete große und kleine Durchmesserabschnitte aufweist, die über Reduzierungs- bzw. Konusabschnitte miteinander verbunden sind.

Eine alternative Event-Rutsche ist beispielsweise in der WO 2013/172801 A1 beschrieben. Diese Röhrenrutsche zeichnet sich durch verbreiterte Kurvengeometrien aus, die einen speziellen Rutschrichtungsverlauf definieren.

Aus der US 2003/0027648 A1 ist eine stark verzweigte Wasserrutsche mit verschiedenen Rutschabschnitten bekannt.

Aus der WO 2009/055555 A2 ist eine klassische Röhrenwasserrutsche beschrieben, die mehrere Leuchteneinbauten aufweist. Eine solche Wasserrutsche ist beispielsweise auch in der US 2009/143155 A1 beschrieben. Ferner sind Wasserrutschen aus der US 2014/309049 A1, der US 2010/160054 A1 und der JP H04 325181 A bekannt.

Ausgehend von den vorstehend erläuterten Bestrebungen sowie dem vorstehend erläuterten Stand der Technik liegt der Erfindung die Aufgabe zugrunde, eine neue, sicher benutzbare Wasserrutsche anzugeben, die dem Benutzer ein außergewöhnliches Rutscherlebnis bietet.

Insbesondere sollen Sinnestäuschungen durch Ausnutzung von Beschleunigungs- und/oder Fliehkräfteinflüssen erzielt werden. Ferner besteht die Aufgabe darin, ein entsprechend verbessertes Wasserrutschensystem anzugeben.

Diese Aufgabe wird hinsichtlich der Wasserrutsche mit den Merkmalen des Anspruchs 1 gelöst, d.h. bei einer gattungsgemäßen Wasserrutsche dadurch, dass an dem Rutschröhrenabschnitt ein Blindröhrenabschnitt mit einer, insbesondere stirnseitigen, Blindröhrenöffnung angrenzt, die von einem sich sowohl in der Rutschrichtung als auch in der Umfangsrichtung des Rutschröhrenabschnittes erstreckenden, bevorzugt in Umfangsrichtung gekrümmten, und bevorzugt in die Form des Rutschröhrenabschnittes eingepassten, durchsichtigen Umfangswandabschnitt des Rutschröhrenabschnittes verschlossen ist. Der Blindröhrenabschnitt umfasst bevorzugt wie der Rutschröhrenabschnitt eine, insbesondere umfangsgeschlossene Umfangswand, wobei es besonders zweckmäßig, jedoch nicht notwendig ist den Blindröhrenabschnitt endgültig zu verschließen, d.h. als Sackgasse auszubilden. Bevorzugt ist die Längserstreckung des Blindröhrenabschnitts bevorzugt (deutlich) kürzer als die des Rutschröhrenabschnittes.

Hinsichtlich des Wasserrutschensystems wird die Aufgabe mit den Merkmalen des Anspruchs 14 gelöst.

Vorteilhafte Weiterbildungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, an einen von einem Benutzer, insbesondere von oben nach unten, durchrutschbaren Rutschröhrenabschnitt einen Blindröhrenabschnitt anzugrenzen, wobei der, insbesondere stirnseitige Querschnitt des Blindröhrenabschnitts, d.h. eine Blindröhrenöffnung verschlossen, d.h., bevorzugt vollständig, überdeckt ist von einem durchsichtigen Umfangswandabschnitt des Rutschröhrenabschnittes. Anders ausgedrückt wird ein Teilabschnitt der Umfangswand des Rutschröhrenabschnittes aus einem durchsichtigen Material gebildet, welches sich über eine Blindröhrenöffnung eines angrenzenden Blindröhrenabschnittes erstreckt, so dass der Nutzer nicht in den Blindröhrenabschnitt hineingelangen kann, sondern weiter entlang der von dem Rutschröhrenabschnitt definierten Rutschrichtung rutscht und dabei die Blindröhrenöffnung innerhalb des Rutschröhrenabschnittes passiert. Der Rutschröhrenabschnitt ist von seinem Anfang bis zu seinem Ende vom Nutzer durchrutschbar, während der Nutzer ausgehend vom Rutschröhrenabschnitt nicht in den Blindröhrenabschnitt hineinrutschen kann. Dabei ist der Blindröhrenabschnitt, insbesondere die Blindröhrenöffnung bevorzugt so angeordnet, dass der Nutzer beim Durchrutschen des Rutschröhrenabschnittes in einem Bereich vor der Blindröhrenöffnung den Eindruck erlangt, die beabsichtigte Rutschrichtung bzw. ein beabsichtigter Soll-Rutschweg verlaufe unmittelbar von dem Rutschröhrenabschnitt durch die Blindröhrenöffnung in den Blindröhrenabschnitt hinein. Da die Blindröhrenöffnung jedoch von einem durchsichtigen Umfangswandabschnitt der Rutschröhre verschlossen ist, wird der Nutzer - für ihn überraschend - an der Blindröhrenöffnung innerhalb des Rutschröhrenabschnittes vorbei an der Blindröhrenöffnung gelenkt und erfährt dabei - je nach Ausgestaltung des Rutschröhrenabschnittsverlaufs - im Bereich des durchsichtigen Umfangswandabschnittes oder in der Rutschrichtung dahinter für ihn überraschende Beschleunigungs- und/oder Fliehkräfte, beispielsweise wenn der Rutschröhrenabschnitt eine nicht erwartete bzw. nicht vorhersehbare Kurve beschreibt und/oder ein unerwartetes Gefälle folgt und der Nutzer aufgrund der optischen Verhältnisse davon ausgehen musste, geradewegs oder mit vorgegebener Krümmung und/oder mit gleichbleibendem Gefälle in den Blindröhrenabschnitt hineinzurutschen. Zur Vervollkommnung des zuvor beschriebenen Effektes ist es bevorzugt, wenn sich der durchsichtige Umfangswandabschnitt des Röhrenrutschabschnittes angrenzende Umfangswandabschnitte stetig, d.h. stufenlos in der Rutschrichtung und in Umfangsrichtung fortsetzt.

Bevorzugt entspricht eine Innenumfangskontur des Blindröhrenabschnittes zumindest näherungsweise einer entsprechenden Umfangskontur des Rutschröhrenabschnittes in einem Bereich benachbart zum Blindröhrenabschnitt. Zusätzlich oder alternativ entspricht die Größe einer Querschnittsfläche des Blindröhrenabschnittes bevorzugt zumindest näherungsweise einer Querschnittsfläche des Rutschröhrenabschnittes und/oder Rutschröhrenabschnitt und Blindröhrenabschnitt weisen zumindest näherungsweise den gleichen maximalen Durchmesser auf. Ganz besonders bevorzugt ist es, wenn der Rutschröhrenabschnitt und/oder der Blindröhrenabschnitt zylindrisch ausgestaltet ist/sind, insbesondere mit einer kreisrunden Querschnittskontur oder einer ovalen Querschnittskontur, wobei für den Fall der Wahl einer ovalen Querschnittskontur das Oval zumindest in einem unteren Bereich und ggf. auch in einem gegenüberliegenden Bereich abgeflacht ausgebildet ist. Bevorzugt weist der Blindröhrenabschnitt eine Mindestlänge (Mindesttiefe) von 5cm, vorzugsweise 10cm auf. Ganz besonders bevorzugt ist es, wenn der Blindröhrenabschnitt, jeweils gemessen ausgehend von dem durchsichtigen Umfangswandabschnitt eine Länge von mindestens 20cm, noch weiter bevorzugt mindestens 50cm, ganz besonders bevorzugt von mehr als 1m, noch weiter bevorzugt von mehr als 2m, ganz besonders bevorzugt von mehr als 3m aufweist.

Endseitig kann der Blindröhrenabschnitt, wie bereits erwähnt, beispielsweise mit einer Deckelplatte und/oder einem Spiegel verschlossen ausgebildet werden. Denkbar ist alternativ auch eine offene, quasi im "Nichts" bzw. in der Luft endende Ausführungsvariante.

Eine weitere Verstärkung des Täuschungs- bzw. Überraschungseffektes ist dadurch möglich, dass der durchsichtige Umfangswandabschnitt, zumindest abschnittsweise einen befeuchtbaren Abschnitt der Rutschfläche des Rutschröhrenabschnittes bildet. Mit anderen Worten fließt ein vorzugsweise als Wasserfilm ausgebildeter Wasserstrom bevorzugt zumindest abschnittsweise über den durchsichtigen Umfangswandabschnitt, so dass ein Nutzer unmittelbar über die Blindröhrenöffnung hinüberrutschen kann. Bevorzugt ist der durchsichtige Umfangswandabschnitt und somit die Blindröhrenöffnung hierzu seitlich und/oder in einem Bodenabschnitt der Umfangswand des Rutschröhrenabschnittes angeordnet. Besonders zweckmäßig ist es für den Fall der Beaufschlagung des durchsichtigen Umfangswandabschnittes mit einem Wasserfilm, dass die Strömungsgegebenheiten der Wasserrutsche bzw. des Systems so ausgestaltet werden, dass auf dem durchsichtigen Umfangswandabschnitt ein besser als eine turbulente Strömung durchblickbarer laminarer Wasserstrom, insbesondere Wasserfilm erzeugt wird, um den gewünschten Überraschungseffekt nicht zu schwächen.

Als besonders zweckmäßig hat es sich herausgestellt, wenn die Umfangswand des Rutschröhrenabschnittes in einem Bereich um den durchsichtigen und sich über die Blindröhrenöffnung erstreckenden Umfangswandabschnitt herum undurchsichtig ist, beispielsweise durch Ausbildung aus Glas, insbesondere eingefärbtem und/oder opakem und/oder, bevorzugt farblich und/oder opak, foliertem glasfaserverstärktem Kunststoff oder zumindest weniger durchsichtig ist als die Blindröhrenöffnung überdeckende durchsichtige Umfangswandabschnitt selbst, um hierdurch den Eindruck zu verstärken, dass der einzig denkbare Rutschverlauf durch die Blindröhrenöffnung bzw. dem durchsichtigen Umfangswandabschnitt hindurchverläuft.

Im Hinblick auf die Materialwahl bzw. konkrete Ausgestaltung des durchsichtigen (Blindröhrenöffnungsüberdeckungs-) Umfangswandabschnittes des Rutschröhrenabschnittes gibt es unterschiedliche Möglichkeiten. Bevorzugt ist dieser so ausgestaltet, dass der Nutzer keinen oder kaum einen Unterschied zu einem freien Querschnitt bzw. zu Luft sieht oder anders ausgedrückt nicht erkennt, dass die Blindröhrenöffnung verschlossen ist. Geeignete Materialien zur Ausbildung des durchsichtigen Umfangswandabschnittes sind beispielsweise Glas, insbesondere Klarglas, wobei für den Fall der Verwendung von Glas dieses bevorzugt als Sicherheitsglas ausgebildet ist. Alternativ ist der Einsatz von durchsichtigem Kunststoff, beispielsweise Polymethylmethacrylat (Acrylglas) denkbar.

Besonders gute Überraschungseffekte können unter Generierung bzw. Ausnutzung entsprechender Fliehkräfte dadurch erzielt werden, dass der Blindröhrenabschnitt an einem Kurvenabschnitt des Rutschröhrenabschnittes angrenzt und der durchsichtige Umfangswandabschnitt nicht nur in Umfangsrichtung des Rutschröhrenabschnittes sondern auch in der Kurvenrichtung des Rutschröhrenabschnitte gekrümmt ist. Besonders zweckmäßig ist es, wenn der Blindröhrenabschnitt an einen äußeren Kurvenradius des vorerwähnten Kurvenabschnitts des Rutschröhrenabschnittes angrenzt, d.h. dass der durchsichtige Umfangswandabschnitt zumindest abschnittsweise im Bereich eines äußeren Radius der von dem Rutschröhrenabschnitt beschriebenen Kurve angeordnet ist. Weiter bevorzugt ist es nun, wenn der Blindröhrenabschnitt so angeordnet ist, dass der Nutzer nicht vermutet, in einer Kurve des Rutschröhrenabschnittes weiterzurutschen, sondern mehr oder weniger geradlinig oder in einem von einem Kurvenradius einer Kurve des Rutschröhrenabschnittes unterschiedlichen Kurvenradius in den Blindröhrenabschnitt hinein. Anders ausgedrückt verlängert bevorzugt der Blindröhrenabschnitt eine vorhergehende Rutschrichtung, was beispielsweise durch im Wesentlichen tangentiale Erstreckung des Blindröhrenabschnittes bezogen auf den Kurvenradius des Kurvenabschnittes des Rutschröhrenabschnittes gewährleistet werden kann.

Besonders zweckmäßig ist es, wenn ein sich in der Rutschrichtung erstreckender Bodenabschnitt des Rutschröhrenabschnittes und ein Bodenabschnitt des Blindrohrabschnittes einen Winkel einschließen.

Besonders eindrückliche Überraschungseffekte können erzielt werden, wenn der Blindröhrenabschnitt sich geradlinig vertikal nach unten erstreckt, der Rutschröhrenabschnitt jedoch zur Vertikalen geneigt ist. Hier wird der Nutzer befürchten, in den Blindrohrabschnitt hineinzufallen, rutscht dann jedoch aufgrund des durchsichtigen Umfangswandabschnittes darüber hinweg. Ein ähnlicher, etwas abgeschwächterer Effekt kann dadurch erzielt werden, wenn sich der Blindröhrenabschnitt nicht exakt vertikal erstreckt, dennoch steil abfällt, insbesondere indem der Blindröhrenabschnitt bzw. dessen Längserstreckung zur Vertikalen unter einem Winkel zwischen 1° und 45°, bevorzugt zwischen 1° und 25° geneigt ist, wobei es bevorzugt ist, wenn eine entsprechende Neigung des Rutschröhrenabschnittes geringer ist als der Neigungswinkel des Blindröhrenabschnittes.

Optimale Effekte werden erfindungsgemäß dadurch erzielt, dass ein von einem Bodenabschnitt des Blindröhrenabschnittes gebildeter Blindrutschabschnitt die Rutschfläche des Rutschröhrenabschnittes stetig verlängert, insbesondere geradlinig bei einem unterstellten geradlinigen Rutschflächenverlauf des Rutschröhrenabschnittes in einem Bereich in der Rutschrichtung vor der Blindröhrenöffnung oder für den Fall eines gekrümmten Rutschflächenverlaufs in einem Bereich vor der Blindröhrenöffnung mit einem, bevorzugt gleichen oder ggf. nur leicht abweichenden Krümmungsradius.

Besonders von Vorteil ist eine Ausgestaltung der Wasserrutsche, bei der ein Deckenabschnitt, d.h. ein oberer Abschnitt, des Rutschröhrenabschnittes stufenlos in einen Deckenabschnitt des Blindröhrenabschnittes übergeht, und/oder ein Bodenabschnitt des Rutschröhrenabschnittes stufenlos in einen Bodenabschnitt des Blindröhrenabschnittes. Bevorzugt sind dabei die höchsten sich in Richtung der jeweiligen Längserstreckung erstreckenden Verlaufslinien der beiden Deckenabschnitte stetig miteinander verbunden bzw. die tiefsten Verlaufslinien der beiden Bodenabschnitte.

Grundsätzlich ist es möglich, an den Rutschröhrenabschnitt nur einen einzigen Blindröhrenabschnitt angrenzen zu lassen. Denkbar und bevorzugt ist jedoch eine Ausführungsform, bei der an den Rutschröhrenabschnitt mehrere Blindröhrenabschnitte (in der Art wie zuvor beschrieben) angrenzen, wobei es möglich ist, zumindest zwei Blindröhrenöffnungen von zwei Blindröhrenabschnitten in der Rutschrichtung zu beabstanden. Zusätzlich oder alternativ ist es möglich, zwei Blindröhrenöffnungen zumindest abschnittsweise an der gleichen Umfangsposition, jedoch in Umfangsrichtung nebeneinander, insbesondere beabstandet zueinander anzuordnen. Besonders zweckmäßig ist es, für den Fall des Vorsehens von mindestens zwei Blindröhrenabschnitten, dass diese sich in unterschiedliche Richtungen erstrecken und/oder in Umfangsrichtung beabstandet angeordnet sind, insbesondere derart, dass diese einen voneinander unterschiedlichen Abstand zu dem jeweils unmittelbar benachbarten Rutschröhrenabschnittboden aufweisen.

Zur weiteren Verstärkung des Überraschungs- bzw. Täuschungseffektes wird in Weiterbildung der Erfindung vorgeschlagen, dem Blindrutschenabschnitt Beleuchtungsmittel zuzuordnen, die derart ausgebildet und angeordnet sind, dass mit diesen der Blindrutschenabschnitt heller ausgeleuchtet wird als der Rutschröhrenabschnitt in einem Bereich in der Rutschrichtung vor und/oder nach der Blindröhrenöffnung. Anders ausgedrückt wird durch die hellere Ausleuchtung des Blindröhrenabschnittes der Blick des Nutzers auf den Blindröhrenabschnitt fokussiert, so dass der Nutzer in seiner Wahrnehmung von der Weiterführung der eigentlichen Rutschbahn im Rutschröhrenabschnitt abgelenkt wird. Bevorzugt wird der Blindröhrenabschnitt zumindest in einem Übergangsbereich zum Rutschröhrenabschnitt heller beleuchtet als der Rutschröhrenabschnitt, bevorzugt 0,5m bis 2m, weiter bevorzugt 1m bis 2mm, vor und/oder nach der Blindröhrenöffnung und/oder in einem von dem Übergangsbereich, insbesondere der durchsichtigen Umfangswand beabstandeten Bereich. Es kann auch sinnvoll und bevorzugt sein, den eigentlichen Übergangsbereich zur Vermeidung von Spiegelungen gerade nicht verstärkt auszuleuchten, sondern den Blindröhrenabschnitt in einem von dem Übergangsbereich beabstandeten Bereich heller auszuleuchten als in dem vorerwähnten Übergangsbereich.

Eine weitere Überraschungseffektverstärkung kann dadurch erzielt werden, dass in dem Blindröhrenabschnitt, bevorzugt innerhalb eines freien Blindröhrenquerschnitts ein dreidimensionaler Gegenstand, beispielsweise in Form einer Person, eines Tiers oder eines Fabelwesens, beispielsweise eine Drachens oder eines Hais angeordnet ist und der Nutzer dadurch den Eindruck erhält, auf diesen Gegenstand draufzurutschen, dann jedoch, insbesondere kurz vorher innerhalb des Rutschröhrenabschnittes abgelenkt bzw. daran vorbeigelenkt wird. Zusätzlich oder alternativ zu einem dreidimensionalen Gegenstand kann auch eine Abbildung eines solchen Gegenstandes im Blindröhrenabschnitt angeordnet sein.

Als besonders zweckmäßig hat es sich herausgestellt, wenn der Blindröhrenabschnitt auf der von dem Rutschröhrenabschnitt abgewandten Stirnseite einen Spiegel aufweist, der bevorzugt derart angeordnet ist, dass er einen davor angeordneten Blindröhrenabschnitt spiegelt, um dem Nutzer somit einen erhöhten Tiefeneindruck zu geben. Unterstützt werden kann dieser Eindruck durch am Umfang des Blindröhrenabschnitts angeordnete Beleuchtungselemente, insbesondere LEDs, insbesondere in Form von Ringen oder einer sich entlang des Blindröhrenabschnittes sowie in Umfangsrichtung wendelnden (Leucht-) Spirale.

Auch ist es denkbar, in dem Blindröhrenabschnitt einen Bildschirm oder eine Projektionsfläche, beispielsweise in Form eines Wasserfalls anzuordnen, wobei auf dem Bildschirm oder der Projektionsfläche unterschiedlichste Bilder, insbesondere Filme wiedergegeben werden können - so ist es beispielsweise denkbar einen scheinbar endlosen Blindröhrenverlauf darzustellen bzw. zu simulieren.

Die Erfindung führt auch auf ein Wasserrutschensystem mit einer nach dem Konzept der Erfindung ausgebildeten Wasserrutsche sowie mit Pumpmitteln, die ausgebildet und angeordnet sind zum Fördern von Wasser zur Ausbildung eines Wasserstroms auf der Rutschfläche des Rutschröhrenabschnittes. Ein besonders guter optischer Täuschungseffekt kann erzielt werden, wenn auch in dem Blindröhrenabschnitt, insbesondere dort bodenseitig ein Wasserstrom, quasi ein Blindwasserstrom erzeugt wird, um dem Benutzer noch intensiver zu vermitteln, dass der Blindröhrenabschnitt bzw. eine darin gebildete Blindrutschfläche durchrutschbar bzw. überrutschbar sei. Alternativ ist es auch denkbar, bewusst auf eine Wasserbeaufschlagung des Blindröhrenabschnittes zu verzichten und einen Wasserstrom nur im Rutschröhrenabschnitt zu erzeugen.

Wie bereits erwähnt ist es bevorzugt, wenn für den Fall, dass der durchsichtige Umfangswandabschnitt zumindest abschnittsweise einen Teil der Rutschfläche bildet, hierauf einen laminaren und damit optimal durchsichtigen Wasserfilm zu erzeugen. Alternativ ist es denkbar, durch eine entsprechende Anordnung des durchsichtigen Umfangswandabschnittes und/oder durch entsprechende Strömungsleitmittel den mittels der Pumpmittel erzeugten Wasserstrom um den dann trotzdem überrutschbaren durchsichtigen Umfangswandabschnitt herumzuleiten.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a bis Fig. 3b:: in den mit a gekennzeichnete Figuren eine Längsschnittansicht durch die in den zugehörigen, mit b gekennzeichneten Figuren dargestellten perspektivischen Ansichten von nach dem Konzept der Erfindung ausgebildeten Wasserrutschen, und
- Fig. 5 bis Fig. 8:: weitere unterschiedliche Varianten von nach dem Konzept der Erfindung ausgebildeten Wasserrutschen.

In den Figuren sind gleiche Elemente und Elemente mit der gleichen Funktion mit den gleichen Bezugszeichen gekennzeichnet.

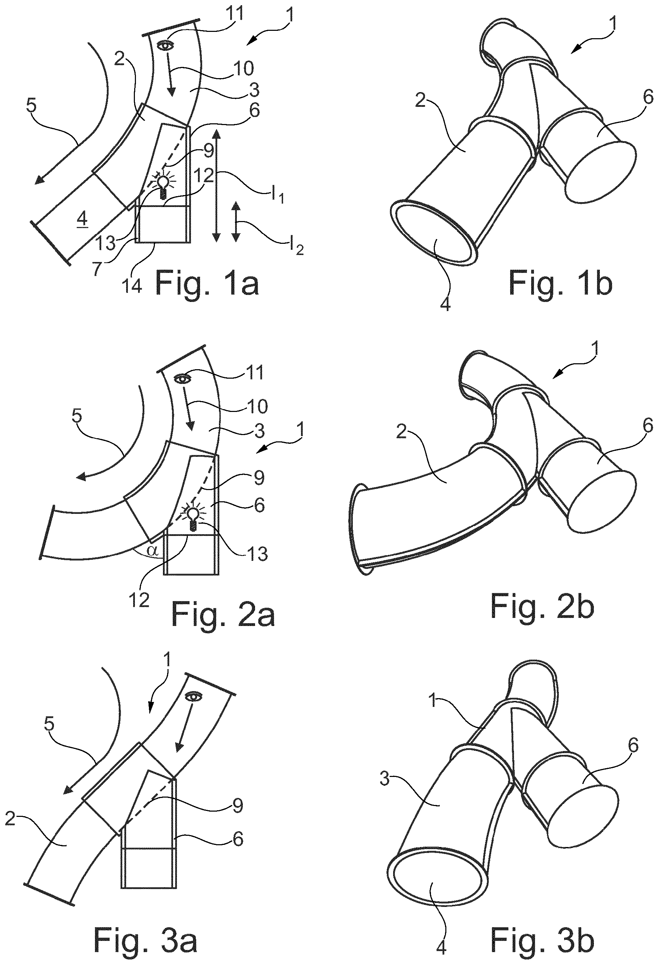

In den Fig. 1a und 1b ist in unterschiedlichen Ansichten ein erstes Ausführungsbeispiel eine nach dem Konzept der Erfindung ausgebildeten Wasserrutsche 1 gezeigt. Zu erkennen ist ein Rutschröhrenabschnitt 2 mit einer umfangsgeschlossenen Umfangswand 3 und einer von der Umfangswand 3 gebildeten Rutschfläche 4, die im Betrieb mit einem Wasserstrom beaufschlagt ist. Der Rutschröhrenabschnitt 2 definiert eine aus Übersichtlichkeitsgründen neben diesem dargestellte Rutschrichtung 5 (Rutschverlauf).

Zu erkennen ist weiter, dass an den Rutschröhrenabschnitt 2 ein (nicht durchrutschbarer) Blindröhrenabschnitt 6 angrenzt, der ebenfalls eine umfangsgeschlossene Umfangswand 3, d.h. eine Blindröhrenumfangswand 7 aufweist. Der Blindröhrenabschnitt 6 weist eine dem Rutschröhrenabschnitt 2 zugewandte, stirnseitige Blindröhrenöffnung 8 auf, die rutschröhrenabschnittsseitig von einem durchsichtigen, beispielsweise aus Acrylglas ausgebildeten Umfangwandabschnitt 9 der Umfangswand 3 des Rutschröhrenabschnitten 2 verschlossen ist, so dass ein Nutzer nicht in den Blindröhrenabschnitt 6 hineinrutschen kann, sondern der von dem Rutschröhrenabschnitt 2 vorgegebenen Rutschrichtung 5 folgt. Lediglich beispielhaft weisen der zylindrische Rutschröhrenabschnitt 2 und der Blindröhrenabschnitt 6 eine kreisförmige Innenumfangskontur auf - andere Innenumfangskonturen sind trotz zylindrischer Ausgestaltung ebenfalls realisierbar, insbesondere eine zumindest näherungsweise ovale Gestaltung, ggf. mit abgeflachtem Boden und/oder Deckenabschnitt.

Zu erkennen ist, dass der Blindröhrenabschnitt 6 eine vermutete Rutschrichtung, die zusammenfällt mit einer Blickrichtung 10 eines angedeuteten Nutzers 11 sich im Wesentlichen stetig fortsetzt. Im konkreten Ausführungsbeispiel grenzt hierzu der Blindröhrenabschnitt 6 an einen Rechtskurvenabschnitt des Rutschröhrenabschnittes 2 an, im Wesentlichen tangential zur Rutschrichtung 5.

Mit Abstand zu dem in einem äußeren Kurvenradius befindlichen, durchsichtigen Umfangswandabschnitt 9, der einen äußeren Kurvenradius begrenzt, befinden sich Effektmittel 12 im freien Querschnitt des Blindröhrenabschnittes 6, beispielsweise in Form eines in Richtung Nutzer 11 bzw. Rutschröhrenabschnitt 2 weisenden Bildschirms oder Spiegels.

Ferner ist Fig. 1a zu entnehmen, dass der Blindröhrenabschnitt 6 mit Hilfe von stilisiert dargestellten Beleuchtungsmitteln 13 stärker, d.h. heller ausgeleuchtet ist, als der Rutschröhrenabschnitt 2.

Eine maximale Länge l₁ des Blindröhrenabschnittes 6 beträgt in dem konkreten Ausführungsbeispiel 3m und die Effektmittel 12 sind in einem Abstand l₂, von dem in dem gezeigten Ausführungsbeispiel 1m von dem von dem Rutschröhrenabschnitt 2 abgewandten (hinteren) Ende 14 des Blindröhrenabschnittes 6 beabstandet.

In Fig. 1b ist die Wasserrutsche gemäß Fig. 1a in einer perspektivischen Ansicht gezeigt. Zu erkennen ist insbesondere der Rutschröhrenabschnitt 2, der vom Nutzer vollständig durchrutschbar ist und der in einem Kurvenabschnitt daran angrenzende Blindröhrenabschnitt 6, der hier beispielhaft endseitig verschlossen ausgebildet ist.

Die in den Fig. 2a und 2b nach dem Konzept der Erfindung gezeigte Wasserrutschenvariante unterscheidet sich von der in den Fig. 1a und 1b gezeigten Variante im Wesentlichen nur durch die unterschiedliche Geometrie. Hier ist die Rechtskurve und somit die Rutschrichtung (Rutschverlauf bzw. Rutschfahrt) stärker gekrümmt ausgebildet, so dass der Benutzer beim Vorbeirutschen und/oder Überrutschen des durchsichtigen Umfangswandabschnittes 9 überraschend noch stärkere Kräfte, hier Fliehkräfte erfährt. Zu erkennen sind auch hier lediglich angedeutete Effektmittel 12, beispielsweise in Form eines Bildschirms oder eines Spiegels. Zusätzlich oder alternativ kann beispielsweise an dieser Stelle auch ein dreidimensionaler Gegenstand oder lediglich die Abbildung eines solchen Gegenstandes angeordnet werden.

Wie bei dem voranstehenden Ausführungsbeispiel spannen auch hier die Rutschrichtung 5 und die Längserstreckung des Blindröhrenabschnittes 6 einen Winkel auf. Ein Winkel α wird ebenso aufgespannt zwischen dem Rutschröhrenabschnitt 2 und dem Blindröhrenabschnitt 6.

In dem Ausführungsbeispiel einer Wasserrutsche gemäß den Fig. 3a und 3b beschreibt der Rutschröhrenabschnitt 2 im Wesentlichen eine S-Kurve und der Blindröhrenabschnitt 6 grenzt im Wesentlichen an einen Sattelabschnitt dieses S-kurvenförmigen Verlaufs an. Auch hier trennt der durchsichtige Umfangswandabschnitt 9 den Rutschröhrenabschnitt 2 vom Blindröhrenabschnitt 6.

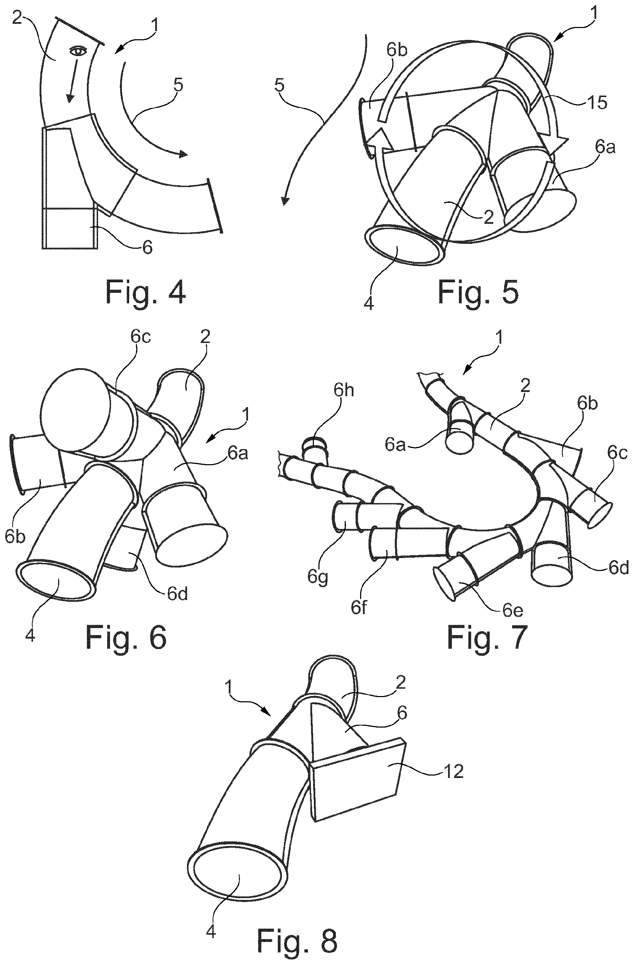

In Fig. 4 ist eine Längsschnittansicht durch einen eine Linkskurve beschreibenden Rutschröhrenabschnitt 2 gezeigt. Im Wesentlichen handelt es sich um eine spiegelsymmetrische Ausbildung der Ausführungsform gemäß von Fig. 2a, so dass bezüglich der Gemeinsamkeiten auf diese zugehörige Figurenbeschreibung verwiesen wird.

Fig. 5 zeigt eine Ausführungsform einer nach dem Konzept der Erfindung ausgebildeten Wasserrutsche 1, bei der auf denselben Umfang, in Umfangsrichtung beabstandet zwei Blindröhrenabschnitte 6 angeordnet sind, die an einen gemeinsamen Rutschröhrenabschnitt 2 angrenzen und im Inneren von diesem über einen nicht gezeigten durchsichtigen Umfangswandabschnitt getrennt sind. Die Pfeile 15 deuten an, dass die Wasserrutsche 1 gemäß Fig. 5 in beliebiger Raumorientierung einbaubar ist, wesentlich ist nur, dass das Gefälle des Rutschröhrenabschnittes 2 ausreichend ist, um diesen vom Anfang bis zum Ende zu durchrutschen.

Fig. 6 zeigt eine weitere alternative Variante einer Wasserrutsche - im Vergleich mit dem Ausführungsbeispiel zu Fig. 5 sind hier noch zwei weitere Blindröhrenabschnitte 6c und 6d zusätzlich zu den beiden Blindröhrenabschnitten 6a und 6b auf demselben Umfangswandabschnitt angeordnet, wobei sämtliche Blindröhrenabschnitte 6a bis 6d über einen nicht gezeigten, durchsichtigen Umfangswandabschnitt von dem Rutschröhrenabschnitt 2 getrennt sind.

Fig. 7 zeigt ein weiteres alternatives Ausführungsbeispiel, bei welchem an einen Rutschröhrenabschnitt 2 eine Vielzahl von hier beispielhaft acht Blindröhrenabschnitte 6a bis 6h an den Rutschröhrenabschnitt 2 angrenzen und die jeweilige Blindröhrenöffnung überdeckt bzw. verdeckt ist von einem durchsichtigen Umfangswandabschnitt des Rutschröhrenabschnittes 2.

In Fig. 8 ist ein Ausführungsbeispiel gezeigt, bei dem endseitig an einem an einen im Wesentlichen S-förmig gekrümmten Rutschröhrenabschnitt 2 angrenzenden Blindröhrenabschnitt 6 ein Effektmittel 12, hier in Form eines Bildschirms angeordnet ist.

## Patentansprüche

1. Wasserrutsche (1) mit einem eine Rutschfläche (4) aufweisenden und eine Rutschrichtung (5) definierenden Rutschröhrenabschnitt (2) mit einer Umfangswand (3),
**dadurch gekennzeichnet,**
**dass** an den Rutschröhrenabschnitt (2) ein Blindröhrenabschnitt (6) mit einer Blindröhrenöffnung (8) angrenzt, die von einem durchsichtigen Umfangswandabschnitt (9) des Rutschröhrenabschnitts (2) verschlossen ist, um ein Hineingelangen eines Nutzers in dem Blindröhrenabschnitt zu verhindern, und dass ein von einem Bodenabschnitt des Blindröhrenabschnitts (6) gebildeter Blindrutschabschnitt die Rutschfläche (4) des Rutschröhrenabschnittes (2) stetig verlängert.

2. Wasserrutsche nach Anspruch 1,
**dadurch gekennzeichnet,**
**dass** der durchsichtige Umfangswandabschnitt (9) zumindest abschnittsweise einen, bevorzugt mit einem Wasserstrom, insbesondere Wasserfilm, befeuchtbaren Abschnitt der Rutschfläche (4) des Rutschröhrenabschnittes (2) bildet.

3. Wasserrutsche nach einem der Ansprüche 1 oder 2,
**dadurch gekennzeichnet,**
**dass** die Umfangswand (3) des Rutschröhrenabschnittes (2) um den durchsichtigen Umfangswandabschnitt (9) herum undurchsichtig oder zumindest weniger durchsichtig ist als der die Blindröhrenöffnung (6) überdeckende durchsichtige Umfangswandabschnitt (9).

4. Wasserrutsche nach einem der vorhergehenden Ansprüche, **dadurch gekennzeichnet,**
**dass** der durchsichtige Umfangswandabschnitt (9) aus Glas, insbesondere Klarglas oder durchsichtigem Kunststoff, insbesondere aus Polymethylmethacrylat, ausgebildet ist.

5. Wasserrutsche nach einem der vorhergehenden Ansprüche, **dadurch gekennzeichnet,**
**dass** der Blindröhrenabschnitt (6), bevorzugt tangential, an einen Kurvenabschnitt, insbesondere an einen äußeren Kurvenradius des Kurvenabschnittes, des Röhrenrutschabschnittes (2) angrenzt und durchsichtige Umfangswandabschnitt (9) nicht nur in Umfangsrichtung sondern auch in einer Kurvenrichtung gekrümmt ist.

6. Wasserrutsche nach einem der vorhergehenden Ansprüche, **dadurch gekennzeichnet,**
**dass** ein sich in Richtung der Rutschrichtung (5) erstreckender Bodenabschnitt des Rutschröhrenabschnittes (2) und ein Bodenabschnitt des Blindröhrenabschnittes (6) einen Winkel aufspannen und/oder der Blindröhrenabschnitt (6) vertikal nach unten verläuft oder unter einem Winkel zur Vertikalen nach unten zwischen 1° und 45°, bevorzugt zwischen 1° und 25° geneigt ist.

7. Wasserrutsche nach einem der vorhergehenden Ansprüche, **dadurch gekennzeichnet,**
**dass** der Blindrutschabschnitt des Blindröhrenabschnitts (6) die Rutschfläche (4) des Rutschröhrenabschnitts (2) geradlinig bei einem geradlinigen Rutschflächenverlauf oder mit dem gleichen Krümmungsradius bei einem gekrümmten Rutschflächenverlauf verlängert.

8. Wasserrutsche nach einem der vorhergehenden Ansprüche, **dadurch gekennzeichnet,**
**dass** ein Deckenabschnitt des Rutschröhrenabschnitts (2) stufenlos in einem Deckenabschnitt des Blindröhrenabschnittes (6) und/oder ein Bodenabschnitt des Rutschröhrenabschnitts (2) stufenlos in einem Bodenabschnitt des Blindröhrenabschnittes (6) übergeht.

9. Wasserrutsche nach einem der vorhergehenden Ansprüche, **gekennzeichnet durch**
mehrere entlang der Rutschrichtung (5) an den Rutschröhrenabschnitt (2) angrenzende Blindröhrenabschnitte (6a bis 6h), jeweils aufweisend eine Blindröhrenöffnung (8), die jeweils von einem durchsichtigen Umfangswandabschnitt (9) des Rutschröhrenabschnitts (2) verschlossen sind, wobei sich bevorzugt mindestens zwei der Blindröhrenabschnitte (6a-6h) in unterschiedliche Richtungen erstrecken und/oder oder in unterschiedlichen Abständen zu einem jeweils unmittelbar benachbarten Rutschröhrenabschnittboden angeordnet sind.

10. Wasserrutsche nach einem der vorhergehenden Ansprüche, **dadurch gekennzeichnet,**
**dass** dem Blindröhrenabschnitt (6) Beleuchtungsmittel (13) zugeordnet sind und der Blindröhrenabschnitt (6), insbesondere in einem an den Rutschröhrenabschnitt (2) angrenzenden Bereich und/oder in einem von diesem Bereich beabstandeten aus Richtung des Rutschröhrenabschnittes (2) sichtbaren Bereich heller ausgeleuchtet ist, als der Rutschröhrenabschnitt (2) in einem Bereich in der Rutschrichtung (5), bevorzugt 0,5m bis 2m, noch weiter bevorzugt 1m bis 2m, vor und/oder nach der Blindröhrenöffnung (8).

11. Wasserrutsche nach einem der vorhergehenden Ansprüche,
**dadurch gekennzeichnet,**
**dass** in dem Blindröhrenabschnitt (6), insbesondere innerhalb eines freien Blindröhrenquerschnitts, von der ein dreidimensionaler Gegenstand oder eine Abbildung eines solchen Gegenstands angeordnet ist.

12. Wasserrutsche nach einem der vorhergehenden Ansprüche,
**dadurch gekennzeichnet,**
**dass** in dem Blindröhrenabschnitt (6), insbesondere als stirnseitiges Abschlusselement, bevorzugt mit Abstand zu dem durchsichtigen Umfangswandabschnitt (9) ein, bevorzugt in Richtung Rutschröhrenabschnitt (2) ausgerichteter, Spiegel angeordnet ist.

13. Wasserrutsche nach einem der vorhergehenden Ansprüche,
**dadurch gekennzeichnet,**
**dass** in dem Blindröhrenabschnitt (6) ein, bevorzugt in Richtung Rutschröhrenabschnitt (2) ausgerichteter, Bildschirm oder eine mit einem Projektor bestrahlbare und/oder bestrahlte, bevorzugt in Richtung Rutschröhrenabschnitt (2) ausgerichtete, Projektionsfläche angeordnet ist.

14. Wasserrutschensystem mit einer Wasserrutsche (1) nach einem der vorhergehenden Ansprüche mit Pumpmitteln zum Fördern von Wasser zur Ausbildung eines Wasserstroms auf der Rutschfläche (4) des Rutschröhrenabschnittes (2) und bevorzugt zumindest abschnittsweise auf dem die Blindröhrenöffnung (8) verschließenden durchsichtigen Umfangswandabschnitt (9).

## Claims

1. A water slide (1) with a tubular slide portion (2), which has a slide surface (4) and defines a sliding direction (5) and has a peripheral wall (3),
**characterized in that**
a blind tube portion (6) with a blind tube opening (8) which is closed by a transparent peripheral wall segment (9) of the tubular slide portion (2) in order to prevent a user from entering the blind tube portion is adjacent to the tubular slide portion (2), and **in that** a blind slide segment formed by a bottom segment of the blind tube portion (6) continuously lengthens the slide surface (4) of the tubular slide portion (2).

2. The water slide according to claim 1,
**characterized in that**
the transparent peripheral wall segment (9) forms at least in some sections a segment of the slide surface (4) of the tubular slide portion (2) that is wettable, preferably with a water stream, in particular a water film.

3. The water slide according to any one of claims 1 or 2, **characterized in that**
the peripheral wall (3) of the tubular slide portion (2) is opaque around the transparent peripheral wall segment (9) or is at least less transparent than the transparent peripheral wall segment (9) covering the blind tube opening (8).

4. The water slide according to any one of the preceding claims, **characterized in that**
the transparent peripheral wall segment (9) is made of glass, in particular clear glass or transparent plastic, in particular polymethyl methacrylate.

5. The water slide according to any one of the preceding claims, **characterized in that**
the blind tube portion (6) is, preferably tangentially, adjacent to a curve segment, in particular on an outer curve radius of the curve segment of the tubular slide portion (2), and the transparent peripheral wall segment (9) is curved not only in the peripheral direction but also in a curved direction.

6. The water slide according to any one of the preceding claims, **characterized in that**
a bottom segment of the tubular slide portion (2) extending in the sliding direction (5) and a bottom segment of the blind tube portion (6) form an angle and/or the blind tube portion (6) runs vertically downward or is inclined downward at an angle to the vertical between 1° and 45°, preferably between 1° and 25°.

7. The water slide according to any one of the preceding claims, **characterized in that**
the blind slide segment of the blind tube portion (6) lengthens the slide surface (4) of the tubular slide portion (2) in a straight line with a linear slide surface course or with the same radius of curvature with a curved slide surface course.

8. The water slide according to any one of the preceding claims, **characterized in that**
a cover segment of the tubular slide portion (2) develops continuously into a cover segment of the blind tube portion (6) and/or a bottom segment of the tubular slide portion (2) develops continuously into a bottom segment of the blind tube portion (6).

9. The water slide according to any one of the preceding claims, **characterized by**
several blind tube portions (6a to 6h) adjacent to the tubular slide portion (2) along the sliding direction (5), each blind tube portion having a blind tube opening (8), each being closed by a transparent peripheral wall segment (9) of the tubular slide portion (2), wherein preferably at least two of the blind tube portions (6a to 6h) extend in different directions and/or are disposed at different distances from a tubular slide portion bottom directly adjacent to each.

10. The water slide according to any one of the preceding claims, **characterized in that**
illumination means (13) are assigned to the blind tube portion (6), and the blind tube portion (6) is more brightly lighted, in particular in an area adjacent to the tubular slide portion (2) and/or in an area at a distance from the former area and visible from the direction of the tubular slide portion (2), than the tubular slide portion (2) in an area in the sliding direction (5), preferably 0.5 m to 2 m, more preferably 1 m to 2 m, upstream and/or downstream from the blind tube opening (8).

11. The water slide according to any one of the preceding claims, **characterized in that**
a three-dimensional object or an image of such an object is disposed in the blind tube portion (6), in particular within a free blind tube cross section.

12. The water slide according to any one of the preceding claims, **characterized in that**
a mirror is disposed in the blind tube portion (6), in particular as a closing element on the end, preferably at a distance from the transparent peripheral wall segment (9), preferably aligned in the direction of the tubular slide portion (2).

13. The water slide according to any one of the preceding claims, **characterized in that**
a display screen, which is preferably aligned in the direction of the tubular slide portion (2), or a projection surface, which is and/or can be irradiated with a projector and is preferably aligned in the direction of the tubular slide portion (2), is disposed in the blind tube portion (6).

14. A water slide system with a water slide (1) according to any one of the preceding claims, comprising pump means for conveying water to form a water stream on the slide surface (4) of the tubular slide portion (2) and preferably on at least some sections of the transparent peripheral wall segment (9), which closes the blind tube opening (8).

## Revendications

1. Toboggan aquatique (1) ayant un tronçon de glissement tubulaire (2) qui a une surface de glissement (4) et définit une direction de glissement (5) et comprend une paroi périphérique (3),
**caractérisé en ce**
**qu'**un tronçon de tube borgne (6), ayant une ouverture de tube borgne (8) qui est fermée par une partie de paroi périphérique (9) transparente du tronçon de glissement tubulaire (2) pour empêcher qu'un utilisateur entre dans le tronçon de tube borgne, est adjacente au tronçon de glissement tubulaire (2), et **en ce qu'**une partie de glissement borgne formée par une partie de fond du tronçon de tube borgne (6) prolonge continuellement la surface de glissement (4) du tronçon de glissement tubulaire (2).

2. Toboggan aquatique selon la revendication 1,
**caractérisé en ce que**
la partie de paroi périphérique (9) transparente forme au moins par sections une partie mouillable, de préférence avec un courant d'eau, notamment avec un film aquatique, de la surface de glissement (4) du tronçon de glissement tubulaire (2).

3. Toboggan aquatique selon la revendication 1 ou 2,
**caractérisé en ce que**
la paroi périphérique (3) du tronçon de glissement tubulaire (2) est opaque autour de la partie de paroi périphérique (9) transparente ou, au moins, moins transparente que la partie de paroi périphérique (9) transparente couvrant l'ouverture de tube borgne (8).

4. Toboggan aquatique selon l'une quelconque des revendications précédentes,
**caractérisé en ce que**
la partie de paroi périphérique (9) transparente est formée de verre, notamment de verre transparent ou de matière plastique transparente, notamment de polyméthacrylate de méthyle.

5. Toboggan aquatique selon l'une quelconque des revendications précédentes,
**caractérisé en ce que**
le tronçon de tube borgne (6) est, de préférence tangentiellement, adjacente à un segment de courbe, notamment à un rayon de courbure extérieur du segment de courbe du tronçon de glissement tubulaire (2), et **en ce que** la partie de paroi périphérique (9) transparente est incurvée non seulement dans la direction périphérique mais aussi dans un sens de courbure.

6. Toboggan aquatique selon l'une quelconque des revendications précédentes,
**caractérisé en ce**
**qu'**une partie de fond du tronçon de glissement tubulaire (2) qui s'étend dans la direction de glissement (5) et une partie de fond du tronçon de tube borgne (6) forment un angle et/ou **en ce que** le tronçon de tube borgne (6) s'étend verticalement vers le bas ou est incliné vers le bas sous un angle entre 1° et 45°, de préférence entre 1° et 25°, par rapport à la verticale.

7. Toboggan aquatique selon l'une quelconque des revendications précédentes,
**caractérisé en ce que**
la partie de glissement borgne du tronçon de tube borgne (6) prolonge la surface de glissement (4) du tronçon de glissement tubulaire (2) en ligne droite en cas d'un parcours de surface de glissement linéaire ou avec le même rayon de courbure en cas d'un parcours de surface de glissement incurvé.

8. Toboggan aquatique selon l'une quelconque des revendications précédentes,
**caractérisé en ce**
**qu'**une partie de plafond du tronçon de glissement tubulaire (2) passe continuellement à une partie de plafond du tronçon de tube borgne (6) et/ou une partie de fond du tronçon de glissement tubulaire (2) passe continuellement à une partie de fond du tronçon de tube borgne (6).

9. Toboggan aquatique selon l'une quelconque des revendications précédentes,
**caractérisé par**
plusieurs tronçons de tube borgne (6a à 6h) qui, le long de la direction de glissement (5), sont adjacents au tronçon de glissement tubulaire (2), chaque tronçon de tube borgne ayant une ouverture de tube borgne (8) dont chacune est fermée par une partie de paroi périphérique (9) transparente du tronçon de glissement tubulaire (2), de préférence au moins deux des tronçons de tube borgne (6a à 6h) s'étendant dans des directions différentes et/ou étant disposés dans des distances différentes à un fond de tronçon de glissement tubulaire directement adjacent.

10. Toboggan aquatique selon l'une quelconque des revendications précédentes,
**caractérisé en ce que**
des moyens d'éclairage (13) sont assignés au tronçon de tube borgne (6) et **en ce que** le tronçon de tube borgne (6) est éclairé plus clairement, notamment dans une zone adjacente au tronçon de glissement tubulaire (2) et/ou dans une zone espacée de cette zone et visible depuis la direction du tronçon de glissement tubulaire (2), que le tronçon de glissement tubulaire (2) dans une zone dans la direction de glissement (5), de préférence 0,5 m à 2 m, encore plus de préférence 1 m à 2 m, avant et/ou après l'ouverture de tube borgne (8).

11. Toboggan aquatique selon l'une quelconque des revendications précédentes,
**caractérisé en ce**
**qu'**un objet tridimensionnel ou un image d'un tel objet est disposé dans le tronçon de tube borgne (6), notamment à l'intérieur d'une section transversale de tube borgne libre.

12. Toboggan aquatique selon l'une quelconque des revendications précédentes,
**caractérisé en ce**
**qu'**un miroir, de préférence aligné dans la direction du tronçon de glissement tubulaire (2), est disposé dans le tronçon de tube borgne (6), notamment comme un élément de fermeture frontale, de préférence à distance de la partie de paroi périphérique (9) transparente.

13. Toboggan aquatique selon l'une quelconque des revendications précédentes,
**caractérisé en ce**
**qu'**un écran, qui est de préférence aligné dans la direction du tronçon de glissement tubulaire (2), ou une surface de projection, qui est éclairée et/ou peut être éclairée par un projecteur et qui est de préférence alignée dans la direction du tronçon de glissement tubulaire (2), est disposé dans le tronçon de tube borgne (6).

14. Système de toboggan aquatique avec un toboggan aquatique (1) selon l'une quelconque des revendications précédentes, comprenant des moyens de pompe pour transporter de l'eau pour former un courant d'eau sur la surface de glissement (4) du tronçon de glissement tubulaire (2) et, de préférence au moins par sections, sur la partie de paroi périphérique (9) transparente qui ferme l'ouverture de tube borgne (8).
